(19) Europäisches Patentamt / European Patent Office / Office européen des brevets

(11) **EP 2 555 445 A1**

(12) **EUROPEAN PATENT APPLICATION**

(43) Date of publication:
06.02.2013 Bulletin 2013/06

(51) Int Cl.:
*H04B 7/06* (2006.01)

(21) Application number: 11290358.8

(22) Date of filing: 03.08.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Alcatel Lucent
75007 Paris (FR)

(72) Inventor: Wild, Thorsten
70435 Stuttgart (DE)

(74) Representative: Schäfer, Wolfgang
Dreiss Patentanwälte
Postfach 10 37 62
70032 Stuttgart (DE)

(54) **Method of operating a transmitter and transmitter**

(57) The invention relates to a method of operating a transmitter (100) of a radio communications system, wherein a process of horizontal beam forming of an antenna characteristic of an antenna system (110) of the transmitter (100) is performed by applying (300) predetermined sets of weight factors (w_1_1, ... w_8_4) to signals associated with different antenna elements (110_1_1, ... 110_8_4) of said antenna system (110) for controlling the antenna characteristic in a horizontal direction, wherein at least one of said weight factors (w_1_1, .., w_8_4) is modified (310) so as to control said antenna characteristic in a vertical direction.

Fig. 5

EP 2 555 445 A1

## Description

### Field of the invention

The present invention relates to a method of operating a transmitter of a radio communications system, wherein a process of horizontal beam forming of an antenna characteristic of an antenna system of the transmitter is performed by applying predetermined sets of weight factors to signals associated with different antenna elements of said antenna system for controlling the antenna characteristic in a horizontal direction.

The present invention further relates to a transmitter of the aforementioned type.

The present invention also relates to a method of operating a receiver and to a receiver.

### Background

From EP 2 161 783 A1, it is already known to perform beamforming of an antenna characteristic in a horizontal direction. Thus, different receivers distributed in a horizontal plane around a transmitter can optimally be served by horizontally directing a main lobe of the antenna characteristic to the individual receivers.

It is also known to use so-called codebooks for the process of horizontal beamforming, wherein the codebooks comprise one or more codebook entries, each of which represents a predetermined set of weight factors. The weight factors are e.g. complex numbers which may be arranged in a matrix form, wherein the matrix elements may directly correspond with respective antenna elements of an antenna system the codebook entry is applied to. Thus, by applying different codebook entries to signals that are to be transmitted, different shapes of the antenna characteristic can be achieved, because the weight factors effect a modification of a phase and/or amplitude of signal portions associated with individual antenna elements.

Presently, radio communications systems do not comprise any mechanisms for efficiently performing a process of vertical beamforming or a combination of horizontal and vertical beamforming.

### Summary

Thus, it is an object of the present invention to provide an improved method of operating a transmitter and an improved transmitter which enable to efficiently implement vertical beamforming and/or a combination of horizontal and vertical beamforming. It is a further object of the present invention to provide an improved method of operating a receiver and an improved receiver which enable to efficiently implement vertical beamforming and/or a combination of horizontal and vertical beamforming.

Regarding the method of operating a transmitter of a radio communications system, this object is achieved by modifying at least one of said weight factors so as to control said antenna characteristic in a vertical direction.

The inventive principle advantageously enables to (also) perform vertical beamforming based on already existing sets of weight factors, i.e. codebooks, designed for horizontal beamforming. Thus, there is no requirement to calculate additional codebooks for being able to implement vertical beamforming. The transmitter according to the embodiments may rather choose a suitable existing codebook, or codebook entry, respectively, as far as horizontal beamforming is concerned, which may e.g. be done by employing conventional algorithms known to the skilled man or implemented in communications standards such as the LTE / LTE-A standard. Once a codebook entry which is suitable for the currently required horizontal beamforming situation is determined, the transmitter according to the embodiments may modify the codebook entry so as to effect a change of the antenna characteristic in the vertical direction.

I.e., according to an embodiment, a transmitter may first determine a suitable codebook entry which represents a desired horizontal antenna characteristic by employing conventional algorithms. After that, the transmitter may modify one or more elements, i.e. weight factors, of the codebook entry to implement the modification of the antenna characteristic in the vertical direction.

The principle according to the embodiments advantageously enables to avoid a severe drawback which comes into effect if a straightforward extension of codebooks for purely horizontal beamforming to vertical beamforming is made. For instance, if there are eight different codebook entries for horizontal beamforming, which e.g. enable eight different horizontal beam patterns, an extension of each of said eight codebook entries to e.g. four different vertical beam patterns would result in thirty-two codebook entries. Thus, such a "straightforward" extension would tremendously increase a conventional codebook's size. Moreover, the codebook grows exponentially with the number of antenna elements. I.e., 8-times the number of antenna elements, result in $\hat{2}^8 = 256$-times the number of precoding / beamforming codebook entries. This is a fundamental disadvantage for the search of the best codebook entry at a receiver in terms of complexity and requiring also much higher feedback overhead for signalling the index of the best weight vector between receiver and transmitter.

In contrast to said "straightforward" extension, the inventive approach advantageously enables to rely on existing horizontal beamforming codebooks and only requires comparatively few extra steps and hardware resources, since existing codebook entries are modified to obtain an altered vertical antenna pattern. Signaling effort which is related to different vertical antenna patterns may also be kept very small, since vertical signaling, too, may simply rely on established signaling mechanisms for horizontal beamforming based on existing codebooks. Only comparatively few additional information may be required to be exchanged for indicating the type of modification of the existing codebook entry, i.e. the information on which tilt angle has been attained by the modification or the like.

E.g., some number of predefined modifications to existing codebook entries may be defined which characterize an alteration of the tilt angle with respect to the original tilt angle that is effected by the existing codebook entries. Exemplarily, three different modifications may be predetermined which e.g. yield an alteration of the tilt angle by 2 degrees each. Signaling information for defining which of the three different modifications or the default tilt angle (as implemented by the existing codebook entry or codebook, respectively) has been used may comprise two bit. I.e., by using two more bits of signaling information, a conventional feedback signaling for horizontal beamforming may be extended by the inventive principle thus additionally enabling vertical beamforming. Advantageously, there is no requirement to introduce further codebook entries, i.e., whole matrices of weight factors, because the extra two bits are sufficient to indicate to which new tilt angle an existing codebook entry has been modified according to the embodiments.

According to an embodiment, a plurality of predetermined sets of weight factors is provided at the transmitter and, preferably, also at at least one receiver that is configured to receive signals from said transmitter. This may e.g. be achieved by employing conventional sets of weight factors for horizontal beamforming, which may already be defined by one or more communications standards.

According to a further preferred embodiment, which facilitates deployment of the technique according to the embodiments, said plurality of predetermined sets of weight factors is

    a) a codebook as defined by

        a1) the long term evolution, LTE, and/or

        a2) LTE-Advanced, LTE-A, standard, and/or

        a3) another standard
    common to the transmitter and said at least one receiver, or

    b) a modified codebook which has been derived from said codebook.

According to a further preferred embodiment, said step of modifying comprises multiplying one or more of said weight factors with a factor depending on a desired tilt angle corresponding with said vertical direction.

According to a further preferred embodiment, said transmitter transmits at least two pilot signals, which are known at the transmitter and at least one receiver that is configured to receive signals from said transmitter, wherein each of said pilot signals is associated with a different tilt angle, which enables the receiver to assess an optimum tilt angle.

According to a further preferred embodiment, said pilot signals are transmitted

    a) simultaneously within

        a1) different spatial streams and/or

        a2) different spreading codes and/or

        a3) different frequency sub-channels, and/or

    b) consecutively.

According to a further preferred embodiment, different pilot signals, which are associated with different tilt angles, are transmitted with different transmit power levels. This embodiment advantageously enables to reduce the effect of a plurality of pilot signals with different tilt angles on the overall communications operation.

According to a particularly preferred embodiment, one or more pilot signals are transmitted at a "default tilt angle", i.e. a tilt angle implemented by an existing conventional codebook entry or determined according to the requirement of the involved radio cell. Especially in those cases, where a conventional codebook entry only defines phase relationships in horizontal direction, a vertical beamforming process may additionally be applied which defines said default tilt angle.

This pilot signal is primarily used for conventional communications quality feedback processes and horizontal beamforming optimization, e.g. by using CQI (channel quality indicator) feedback from the receiver to the transmitter. At least one further pilot signal which is transmitted by means of a modified codebook entry, i.e. by using a non-standard tilt angle, which is different from the default tilt angle, i.e. by a predetermined increment (e.g. +/- 1 degree), may be transmitted with a lower transmit power as compared to the first pilot signal at the default tilt angle. Thus, it is guaranteed, that the further pilot signal, which may e.g. be used to optimize a tilt angle, only has a reduced impact on the further communications processes. Moreover, since the precision of a channel estimation, which is performed depending on the pilot signals in a per se known manner, depends on a signal to noise plus interference ratio, SINR, of the received pilot signals, it is also guaranteed, that by using the first, strongest pilot signal (with the highest transmission power), for channel estimation, a maximum precision regarding channel estimation can be attained, whereas the further pilot signals which serve to find an optimized tilt angle are not required to have the same high transmit power.

According to a particularly preferred embodiment, there is a continuous adaptation of tilt angle between transmitter (i.e., base station) and receiver (i.e., terminal). Preferably, after a specific pilot signal has been transmitted using a first tilt angle, i.e. said default tilt angle, in a first transmission cycle, a subsequent transmission cycle may comprise a new, adapted tilt angle for said specific pilot signal. For instance, the adapted tilt angle may be derived from the first tilt angle by means of an increment or depending on signal quality evaluations.

According to a further preferred embodiment, said transmitter is configured to receive feedback information comprising information on a quality measure associated with at least one transmission of said transmitter at a specific tilt angle. Such feedback information may e.g. be determined by one or more receivers that have received pilot signals from the transmitter. Preferably, the feedback information is associated with a specific tilt angle, i.e. includes information on which receive quality (e.g., SINR) has been achieved by which tilt angle, i.e. which type of modified codebook entry that has been used by the transmitter for transmitting the respective pilot signal. Advantageously, for the feedback information, existing quality reporting mechanisms such as CQI may be employed, which may be extended by adding further feedback information indicating e.g. the respective tilt angles or some kind of index information which enables the transmitter to determine which piece of feedback information relates to which pilot signal.

In order to reduce the required feedback rate further, the CQI per tilt may be indicated relative to the CQI of the default tilt (in case this value is always available). So the base station can extract the actual CQI as a sum of default-tilt-CQI and relative-CQI-per-tilt.

Thus, from evaluating the feedback information, the transmitter may advantageously determine an optimum tilt angle which may be used for future transmissions to the receiver, but also for receiving signals from the receiver. I.e., if the transmitter according to the embodiments is implemented in a base transceiver station of a cellular communications network, both uplink and downlink transmissions may make use of an optimized tilt angle determined according to the embodiments.

The determination of an optimized tilt angle may be performed only once, but preferably periodically, in the sense of an iterative process, to continuously adapt a vertical beam pattern of the transmitter's antenna system to actual operating conditions such as e.g. a vertical position of a receiver.

A further solution to the object of the present invention is given by a transmitter according to claim 9. The transmitter is configured to perform a process of horizontal beam forming of an antenna characteristic of an antenna system of the transmitter by applying predetermined sets of weight factors to signals associated with different antenna elements of said antenna system for controlling the antenna characteristic in a horizontal direction, wherein said transmitter is configured to modify at least one of said weight factors so as to control said antenna characteristic in a vertical direction.

Advantageously, said transmitter is configured to perform the method according the embodiments.

A further solution to the object of the present invention is given by a method of operating a receiver according to claim 11. The method proposes that said receiver receives at least two pilot signals from a transmitter, which are known at the transmitter and at the receiver, wherein each of said pilot signals is associated with a different tilt angle corresponding with a vertical direction of an antenna characteristic of an antenna system of the transmitter.

According to an embodiment, said pilot signals are received a) simultaneously within a1) different spatial streams and/or a2) different spreading codes and/or a3) different frequency sub-channels, and/or b) consecutively.

According to a further embodiment, said receiver evaluates said pilot signals to determine a quality measure associated with said pilot signals, and returns feedback information comprising information on said quality measure to the transmitter.

Yet another solution to the object of the present invention is given by a receiver of a radio communications system, wherein said receiver is configured to receive at least two pilot signals from a transmitter, which are known at the transmitter and at the receiver, wherein each of said pilot signals is associated with a different tilt angle.

Preferably, the receiver is configured to perform the method according to the embodiments.

**Brief description of the figures**

Further features, aspects and advantages of the present invention are given in the following detailed description with reference to the drawings in which:

Figure 1    depicts a schematic block diagram of a transmitter according to an embodiment,

Figure 2    schematically depicts a top view of a horizontal beamforming scenario,

Figure 3    schematically depicts an antenna system of a transmitter according to an embodiment,

Figure 4    depicts a beamforming matrix that can be applied to signals transmitted via the antenna system according to Fig. 4 for beamforming,

Figure 5    schematically depicts a side view of a vertical beamforming scenario,

Figure 6    depicts a simplified flow chart of a method according to the embodiments,

Figure 7    depicts a simplified block diagram of a method according to the embodiments, and

Figure 8    depicts a communications diagram according to an embodiment.

**Description of the embodiments**

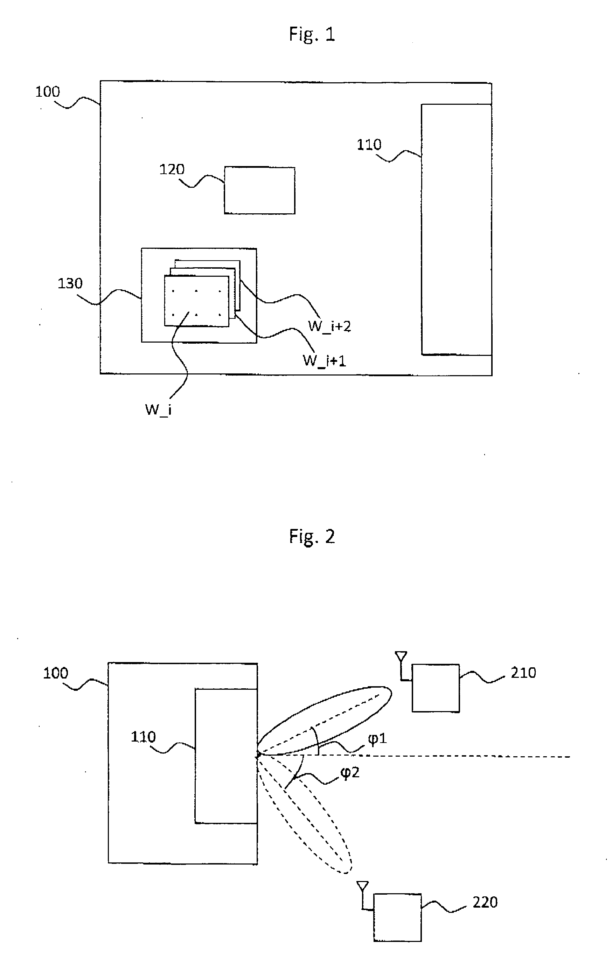

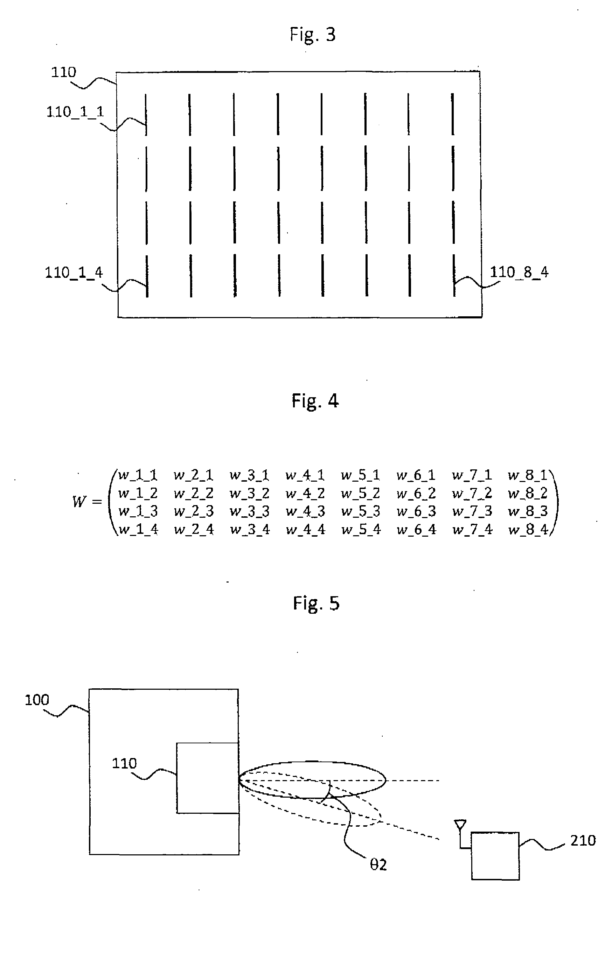

Figure 1 depicts a schematic block diagram of a transmitter 100 according to an embodiment. The transmitter 100 may e.g. form part of a radio communications system, particularly a cellular radio communications system such as according to the LTE or LTE-A standard.
The transmitter 100 comprises an antenna system 110 an exemplary embodiment of which is depicted in Fig. 3. The antenna system 110 comprises a plurality of individual antenna elements 110_1_1, .., 110_8_4 which are arranged in a matrix form comprising eight columns and four rows. Other arrangements of antenna elements are also possible (including antenna elements with different polarization, e.g. +- 45°).
By individually supplying the various antenna elements 110_1_1, .., 110_8_4 with a respective instance of a signal to be transmitted, a resulting antenna characteristic of said antenna system 110 can be influenced in a per se known manner ("phased array antenna"). Preferably, the various antenna elements 110_1_1, .., 110_8_4 may be supplied with phase-shifted instances of the same transmit signal to alter the beam pattern of the antenna system 110 both in a horizontal and/or vertical direction.
Fig. 4 depicts a matrix W each element $w\_1\_1, .., w\_8\_4$ of which represents a weight factor characterizing a phase shift and/or amplitude modification that may be applied to a corresponding antenna element 110_1_1, .., 110_8_4 of the antenna system 110 (Fig. 3). I.e., by choosing $w\_1\_1=1$, it is determined that the antenna element 110_1_1 is supplied with the non-phase-shifted instance of the transmit signal and that no amplitude modification is applied. Usually, the weight factors $w\_1\_1, .., w\_8\_4$ are represented by complex numbers.
For facilitating an efficient horizontal beamforming, conventional transmitters as e.g. provided within LTE base stations comprise at least one so-called code book, which is a collection of a plurality of matrices similar to the matrix W depicted by Fig. 4. Each of said matrices of the code book is also referred to as "codebook entry". For a given antenna system 110, the matrix elements of each codebook entry are determined so as to provide a plurality of different horizontal beam patterns. I.e., a codebook may comprise eight different entries each of which - when being applied to the transmit signal in the sense of a weighting operation - effects a different horizontal beam pattern of the antenna system 110. Thus, by picking one entry from the codebook, a transmitter may efficiently reconfigure the beam pattern of its antenna system 110 without performing complex calculations. The beamforming matrix is employed in a per se known manner in a signal processing chain and may e.g. be multiplied with a signal vector that comprises data symbols to be transmitted by the transmitter 100. Note that according to an embodiment, existing antenna calibration algorithms and procedures can be required and/or used in order to ensure that the phase and amplitude relationships at the output of the digital baseband signal processing are preserved at the output of the transmit antennas.
The transmitter 100 (Fig. 1) according to the embodiments also comprises a codebook 130, which may contain several codebook entries $W\_i, W\_i+1, N\_i+2, ..$, i.e. beamforming matrices.
According to another embodiment, the dimensions of precoding matrices might differ from the dimensions of antenna elements depicted in Fig.3, as this codebook can be intended for horizontal beamforming/precoding only, e.g. as defined in 3GPP TS36.211 (release 8,9,10). Thus this codebook describes amplitude and phase relations between the element columns of Fig. 3 for a given fixed downtilt. The latter one again may be created by mechanically tilting the antenna array or modifying the amplitudes and phases per column, as known from classical beamforming technology for generalized array configuration, as e.g. in "Phased Array Antenna Handbook", R.J. Mailloux, Artech House, Boston/ London, 1993.

An operation of the transmitter 100 is controlled by the control device 120 that may comprise processor means such as a microcontroller, a digital signal processor (DSP) or a programmable logic circuit and the like. The control device 120 is configured to perform the method according to the embodiments as explained below. Particularly, the control device 120 is configured to select and use a specific beamforming matrix from the codebook 130 depending on a horizontal beam pattern to be realised by the antenna system 110.

Figure 2 schematically depicts a top view of a horizontal beamforming scenario comprising the transmitter 100 of Fig. 1 and its antenna system 110. For implementing a horizontal beam pattern of the antenna system 110 which exhibits a main lobe in a first direction characterized by a first azimuth angle $\varphi1$ with respect to a reference angle (i.e., the dashed line of Fig. 2, which defines an azimuth angle of $\varphi=0$), the transmitter 100 under the control of the control device 120 selects a corresponding first beamforming matrix W_i+1 (Fig. 1). As can be seen from Fig. 2, the resulting horizontal beam pattern is ideal for data transmissions to the first receiver 210, which may be a terminal ("User Equipment") served by the LTE base station comprising the transmitter 100.

However, for optimizing data transmissions to the second receiver 220, as far as an azimuth (horizontal) direction is concerned, the transmitter 100 may - again under the control of the control device 120 - select another beamforming matrix W_i+2 (Fig. 1) from its codebook 130 which ensures that the main lobe of the resulting beam pattern of the antenna system 110 is in line with the direction defined by the second azimuth angle $\varphi2$.

According to the embodiments, the above explained technique of horizontal beamforming by using the codebook 130 is extended to vertical beamforming.

More specifically, in order to alter a beam pattern of the antenna system 110 in vertical direction, the embodiments propose not to provide extra beamforming matrices "from scratch", but rather to modify at least one of said weight factors w_1_1, .., w_8_4 (Fig. 4) of a suitable existing beamforming matrix from the codebook 130 so as to control said antenna characteristic in a vertical direction.

Optionally, if there is only an existing beamforming vector, e.g. comprising the elements w_1_1 to w_8_1, (i.e., a line vector) which is sufficient for defining horizontal phase relationships as used for conventional horizontal beamforming, this existing beamforming vector may suitably be expanded prior to applying the further steps according to the inventive principle. Such expansion may e.g. comprise providing three further line vectors w_1_2, .., identical to the existing beamforming vector which may be identical to the existing beamforming vector w_1_1 to w_8_1. Alternatively, the different line vectors may also be modified individually with respect to each other to define a specific tilt angle, which may e.g. constituted the default tilt angle referred to above.

The inventive principle, according to which an existing codebook entry, i.e. beamforming matrix (which may also be obtained by the above explained step of expansion from an existing line vector), is used as a basis for vertical beamforming, has the significant advantage that existing codebooks 130 and well-established feedback mechanisms e.g. for closed-loop feedback processes aimed at horizontal beamforming between the transmitter 100 and the receiver 210 may be relied upon.

I.e., initially, for a first transmission of signals to the receiver 210, the transmitter 100 may employ the already existing codebook entry W_i+1, which may e.g. be defined by the LTE standard and as such well known by the transmitter and LTE compatible terminals 210, 220.

Obviously, the already existing codebook entry w_i+1 is also associated with a specific tilt angle (also: "downtilt" because most operational scenarios require negative tilt angles with respect to a virtual horizontal reference plane) that correlates with a vertical antenna pattern that is established when using the existing codebook entry W_i+1 for beamforming. Such default downtilt angle may e.g. amount to about -10° with reference to a virtual horizontal plane. I.e., by default, all codebook entries of the codebook 130 may provide the default tilt angle of about - 10°. According to a preferred embodiment, cell-specific reference symbols (CRS), also called common pilots or training symbols, which are used over the entire cell for measurements, e.g. for handover, are always transmitted with this default downtilt.

To improve communications with a specific receiver 210, the transmitter 100 according to the embodiments may - apart from performing conventional horizontal beamforming by means of the codebook 130 - advantageously also take into account a vertical position of the receiver 210 with respect to the transmitter 100.

This may e.g. be achieved by transmitting several reference signals (also known as training or pilot symbols), which are preferably known both at the transmitter 100 and the receiver 210 from the transmitter 110 to the receiver 210, wherein different reference signals are transmitted with different tilt angles each. According to a further preferred embodiment, those reference symbols can be user-specific. Thus they are transmitted with the same antenna weights than corresponding time-frequency neighboured data-symbols for a particular user. In analogy to the LTE terminology of 3GPP release 9 and 10, they can be called demodulation reference symbols (DMRS).

Upon receiving said different reference signals at said different downtilts, the receiver 210 may assess a quality measure which may e.g. comprise a SINR associated with the different reference signals received at said different downtilts. For each reference signal, a corresponding quality measure may be forwarded from the receiver 210 to the transmitter 100 either directly (uplink direction) or via other devices/feedback channels.

According to an embodiment, which is e.g. applicable to LTE / LTE-Advanced systems, the following measures may be applied: While for default downtilt measurements, the receiver still relies on the CRS, which use a constant downtilt, for the offered deviating downtilts, the SINR / CQI / CQI relative to default downtilt measurements may now be based on the DMRS. Here pilot sets may be used which were designed for additional spatial streams / layers and are currently unused.

Upon receiving the feedback data comprising the different quality measures, the transmitter 100 may determine which of the previously used downtilts yields optimal values of the quality measure and may in future use the so determined optimal downtilt for downlink and/or uplink transmissions.

Iteratively optimizing the downtilts is also possible. This may be achieved by repeating the above explained procedure continuously.

Fig. 5 schematically depicts a side view of the transmitter 100 an a receiver 210.

A main lobe of a first vertical antenna pattern as implemented by the transmitter 100 is aligned horizontally. This vertical antenna pattern may e.g. be attained by employing the first beamforming matrix W_i+1 of the codebook 130 (Fig. 1).

As is obvious from Fig. 5, the main lobe of a further vertical antenna pattern drawn with a dashed line would be better suited for transmissions to the receiver 210 than the first main lobe, which is due to the vertical displacement of the components 100, 210 with respect to each other.

Generally, for implementing a vertical antenna pattern which deviates from the standard shape as defined by the conventional codebook 130, the present embodiments propose to alter one or more weight factors, i.e. matrix elements, of the respective beamforming matrix.

Preferably, the following approach is done: The conventional codebook is decomposed into precoding vectors per spatial stream/layer. Each element of the vector corresponds to the conventional horizontal weight used as input for an entire antenna element column. In order to expand this conventional codebook vector into the larger 2-D array weight vector matrix of Fig. 4, each element of the conventional vector is repeated in an entire column of the 2-D array. In order to create the default downtilt or any other new alternative tilt.

The objective of this modification is to preserve the original horizontal pattern of the conventional codebook vector, while creating a desired downtilt, thus steering the main lobe of the beam in the desired horizontal and vertical direction. (In the case when also different polarization directions are used, the precoding vector/matrix from the codebook has to be expanded to the overall weights in fig.4 such, that the original resulting horizontal directivity pattern of the element columns is preserved per polarization direction and the phase relations between the different polarization directions are also preserved as much as possible.)

For instance, each weight factor w_1_1, w_2_1, .., w_8_1 that is associated with an antenna element of a specific row of the matrix configuration of Fig. 3, may be multiplied by a (same) factor depending on the desired tilt angle and the vertical position of the respective antenna element row in the matrix (Fig. 3). Thus, the vertical beam pattern may be influenced so as to alter the tilt angle, e.g. to the value of the desired tilt angle $\theta 2$ (Fig. 5). A suitable factor for modifying individual weight factors w_1_1, w_2_1, ... w_8_1 particularly regarding their phase may e.g. be described by: $\exp(-j*k*z*\cos(\theta))$, wherein $\exp(.)$ is the exponential function, $j$ is the imaginary unit, $k$, $z$ represent geometrical parameters defining a vertical position of an antenna element, and $\theta$ is a desired resulting tilt angle of a main lobe of the antenna pattern that is to be effected by the modified beamforming matrix. By using existing codebook entries as a basis for the modification according to the embodiments, the existing horizontal beamforming feedback techniques may still be employed, as well as the respective feedback information. Additionally, only predefined manipulations to the existing codebook entries must be defined and associated with some additional signaling information so that a defined reconfiguration of the vertical beam pattern may be performed and signalled between the involved components 100, 210.

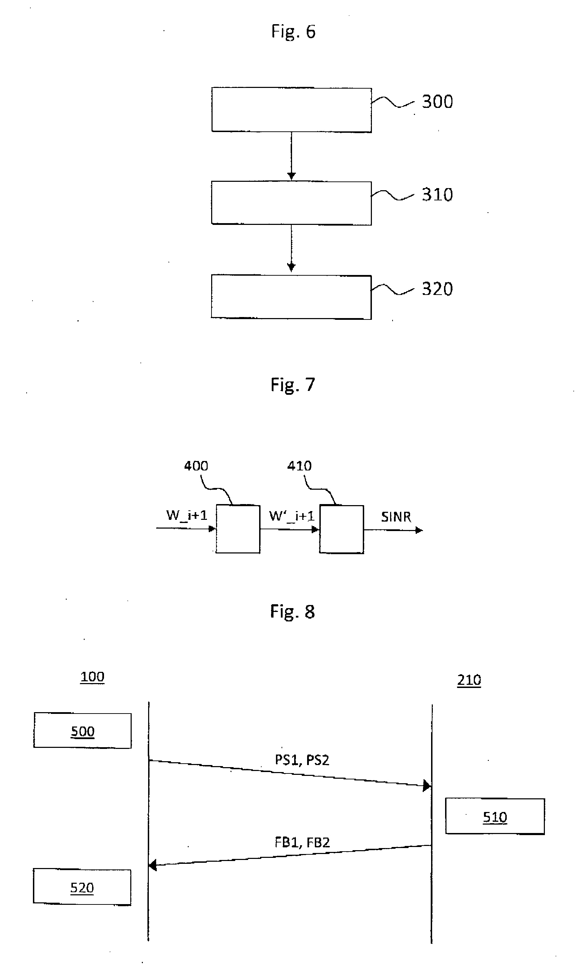

Figure 6 exemplarily depicts a simplified flow chart according to an embodiment.

In a first step 300, the transmitter 100 selects and applies a predetermined set of weight factors w_1_1, .., w_8_4, e.g. the first beamforming matrix W_i+1, to a reference signal to be transmitted, which results in a well-defined antenna characteristic in a horizontal direction for the respective transmission. Also, the antenna characteristic in a vertical direction is well-defined in that a specific vertical beam pattern is defined by the first beamforming. matrix W_i+1. For instance, the application of the first beamforming matrix W_i+1 results in a beam pattern having the azimuth main lobe angle $\varphi 1$ as depicted by Fig. 1 and the horizontally aligned vertical main lobe of Fig. 5. Using this antenna beam pattern, a first reference signal is sent to the receiver 210.

After that, in step 310, the first beamforming matrix w_i+1 or at least one weight factor thereof, is modified in order to alter the resulting vertical beam pattern, for example to attain the desired shape which is symbolized by a dashed ellipse in Fig. 5. Preferably, the horizontal beam pattern is not altered by said modification, since it is already optimal, cf. Fig. 1. Using this further antenna beam pattern, which comprises an increased downtilt angle with respect to the previously used beam pattern, a second reference signal is sent to the receiver 210.

After that, in step 320, the receiver 210 evaluates both received reference signals and derives respective quality measures (i.e., SINR) therefrom which may be returned to the transmitter 100 in an uplink communication (not shown) to provide feedback information on which tilt angle to use in future.

According to further preferred embodiments, said plurality of predetermined sets of weight factors w_1_1, ... w_8_4 the embodiments are based on is

a) a codebook 130 as defined by

a1) the long term evolution, LTE, and/or

a2) LTE-Advanced, LTE-A, standard, and/or

a3) another standard

common to the transmitter 100 and said at least one receiver 210, or

b) a modified codebook which has been derived from said codebook 130, i.e. in the course of further codebook adaptations, which may be combined with the embodiments.

In any case, since the embodiments are directed to modify existing beamforming matrices W_i, W_i+1, .. (Fig. 1) which are already known to both involved components 100, 210, comparatively few additional signaling is required.

The modification 310 (Fig. 3) of an existing beamforming matrix or its weight factor elements, respectively, may e.g. be performed by multiplication with a factor depending on a desired tilt angle. However other modifications such as addition or the like is also possible.

According to a further preferred embodiment, said transmitter 100 transmits at least two pilot signals PS1, PS2, which are known at the transmitter 100 and at least one receiver 210 that is configured to receive signals from said transmitter 100, cf. the communications diagram of Fig. 8, step 500. The pilot signals PS1, PS2 may e.g. be the DMRS dedicated pilot signals as defined by the LTE and LTE-A standards, and may be associated with a different tilt angle each as explained above.

In LTE-A, there are so-called demodulation reference symbols which offer orthogonal pilot sequences PS1, PS2, .. for at least 4 spatial streams. They may be inserted into physical resource blocks (PRB) dedicated to the respective receiver 210 and are precoded/beamformed (in a mathematical sense, precoding is equivalent to beamforming, because both operations imply a multiplication of a signal vector/matrix by a respective precoding or beamforming matrix) by means of a conventional and/or the modified beamforming matrix, cf. the steps 300, 310 of Fig. 6, so that an overall precoded/beamformed transmission of one stream can be seen from receiver perspective as a transmission from a single virtual antenna with a specific horizontal and vertical beam pattern.

Thus, advantageously, the transmission 500 of pilot signals PS1, PS2, .. (Fig. 8) may be performed on a per-user basis so that the optimization of a vertical beam pattern according to the embodiments may also be effected for individual users/receivers 210, 220 (Fig. 2).

According to a further embodiment, said pilot signals PS1, PS2 are transmitted simultaneously within different spatial streams as enabled e.g. according to the LTE-A standard.

Alternatively or in addition, said pilot signals PS1, PS2 may also be transmitted simultaneously, i.e. at the same time, within different frequency sub-channels that may be employed by the transmitter 100, e.g. different subcarriers of an LTE time/frequency radio resource configuration.

According to a further embodiment, it is also possible to transmit said pilot signals PS1, PS2 consecutively, i.e. one after the other.

After receiving 510 (Fig. 8) the pilot signals PS1, PS2, the receiver 210 may evaluate them and provide respective feedback information FB1, FB2 to the transmitter 100. After receiving 520 said feedback FB1, FB2, the transmitter 100 may control further transmissions to the receiver 210 depending on the feedback information FB1, FB2. For example, the transmitter 100 may perform further modifications of existing or previously modified beamforming matrices, to evaluate feedback information for other tilt angles or vertical beam patterns, respectively.

Generally, horizontal and vertical beamforming may also be mixed according to the embodiments. E.g., it is possible to first determine a suitable existing beamforming matrix from the codebook 130 (Fig. 1) to optimize horizontal beamforming. After that, the so chosen existing beamforming matrix may be modified according to the embodiments to adjust the vertical beam pattern.

Alternatively, during an (iterative) adjustment of the vertical beam pattern by modification according to the embodiments, it is also possible to "change" the underlying existing codebook entry, e.g. if horizontal beamforming has to be adjusted due to a comparatively large change in the horizontal position of the receiver 210. However, the new codebook entry, which addresses the change in the horizontal configuration, may also be modified according to the embodiments, e.g. by means of those factors which have before been used to modify the previous codebook entry. Thus, a vertical beam pattern adjustment process is not substantially interrupted even if the underlying basis, i.e. existing beamforming matrix, is changed.

According to a further preferred embodiment, different pilot signals PS1, PS2 (Fig. 8), which are associated with different tilt angles, are transmitted with different transmit power levels. This embodiment advantageously enables to reduce the effect of a plurality of pilot signals PS1, PS2 with different tilt angles on the overall communications operation. According to a particularly preferred embodiment, one or more pilot signals PS1 are transmitted at a "default tilt angle", i.e. a tilt angle implemented by an existing conventional codebook entry W_i+1 (Fig. 1). This pilot signal PS1 is primarily used for conventional communications quality feedback processes and horizontal beamforming optimization, e.g. by using CQI (channel quality indicator) feedback from the receiver 210 to the transmitter 100. At least one further pilot signal PS2 (Fig. 8) which is transmitted by means of a modified codebook entry W_i+1', i.e. by using a non-standard tilt angle, which is different from the default tilt angle, i.e. by a predetermined increment (e.g. +/- 1 degree), may be transmitted with a lower transmit power as compared to the first pilot signal PS1 at the default tilt angle. Thus, it is guaranteed, that the further pilot signal PS2, which may e.g. be used to optimize the tilt angle, only has a reduced impact on the further communications processes. Moreover, since the precision of a channel estimation, which is performed depending on the pilot signals PS1, PS2 in a per se known manner, depends on a signal to noise plus interference ratio, SINR, of the received pilot signals, it is also guaranteed, that by using the first, strongest pilot signal PS1 (with the highest transmission power), for channel estimation, a maximum precision regarding chancel estimation can be attained, whereas the further pilot signals PS2 which serve to find an optimized tilt angle are not required to have the same high transmit power.

Fig. 7 depicts a simplified block diagram of a method according to the embodiments. An existing codebook entry, e.g. beamforming matrix, W_i+1 is retrieved by the control device 120 (Fig. 1) from the codebook 130. After that, in block 400, the functionality of which may also be implemented within the control device 120, the retrieved beamforming matrix W_i+1 is modified according to the embodiments to alter a resulting vertical beam pattern, whereby a modified beamforming matrix W'_i+1 is obtained.

As already explained above, if there is only an existing beamforming vector, e.g. comprising the elements w_1_1 to w_8_1, (i.e., a line vector) which is sufficient for defining horizontal phase relationships as used for conventional horizontal beamforming, this existing beamforming vector may suitably be expanded in order to provide the existing codebook entry prior to applying the further steps according to the inventive principle.

This modified beamforming matrix W'_i+1 may be employed for transmission of one or more pilot signals PS2 to the receiver 210, cf. the processing block 410 of Fig. 7. The processing block of Fig. 7 further includes a receiving process of the pilot signal PS2 at the receiver 210 and an evaluation at the receiver 210, e.g. of a quality measure associated with the pilot signal PS2, which finally yields an SINR value associated with the pilot signal PS2. Based on this SINR value associated with the modified beamforming matrix W'_i+1 that has been employed for transmitting the pilot signal PS2 to the receiver 210, the transmitter 100 may determine whether using the modified beamforming matrix W'_i+1 yielded any advantages regarding transmission quality e.g. as compared to a transmission of a pilot signal PS1 with a standard beamforming matrix W_i+1. From this evaluation, it can be derived whether the non-standard downtilt as implemented by said modified beamforming matrix W_i+1 is better suited for transmissions to the receiver 210 than the standard downtilt as implied by the standard beamforming matrix W_i+1. Of course, according to further embodiments, relative improvements of transmission quality (comparison between different non-standard downtilts) may also be assessed.

Advantageously, according to an embodiment, the transmitter 100 is configured to receive 520 (Fig. 8) feedback information FB1, FB2 comprising information on a quality measure associated with at least one transmission of said transmitter 100 at a specific tilt angle.

Generally, the principle according to the embodiments is based on a reuse of existing codebooks 130 (Fig. 1), as well as of existing, i.e. standardized, pilot signals and feedback mechanisms provided for the horizontal dimension.

According to a further embodiment, vertical beamforming of common pilot signals (cell-specific reference symbols) and transmission to new users 210, 220 may be done with a default downtilt (e.g. the same as optimized for static downtilt, which is implied by existing codebooks 130). According to a further embodiment, existing orthogonal sets of dedicated pilot signals are used to do user-individual downtilt measurements, e.g. when there is data transmission towards a user (receiver 210). In this case, the transmitter 100 may use orthogonal dedicated pilot patterns of unused spatial streams of a communications process between transmitter 100 and receiver 210 to offer alternative downtilts to the mobile. The alternative downtilts may advantageously be obtained by employing modified beamforming matrices on the basis of the existing codebook 130, as explained above. Further, the receiver 210 may estimate a receive SINR of the pilot signals PS1, PS2 (Fig. 8) with different downtilts used for transmission, said different downtilts also comprising alternative downtilts as obtained by modification of existing codebook entries. In case one of the alternative downtilts (or the associated beamforming matrix, i.e. codebook entry) achieves a better SINR, this is indicated by the receiver 210 to the transmitter 100 in the sense of a feedback loop. Advantageously, according to some embodiments, the transmitter 100 uses knowledge obtained from the receiver 210 by means of the feedback information FB1, FB2 (Fig. 8). If there is a better alternative downtilt, the transmitter 100 may make use of it for the next transmission(s). When making these decisions, the transmitter 100 may also take into account global optimizing criteria, i.e. whether the alternative downtilt, which yields a better SINR at one specific receiver 210, is also considered advantageous for the overall system such as a radio cell operated by said transmitter 100. The above mentioned step of offering alternative downtilts, which can be incremental changes, is preferably repeated constantly in the sense of an iterative optimization process, which allows converging to the knowledge of optimal downtilt. As already mentioned above, a vertical beam pattern optimization according to the embodiments may also be combined with a (conventional) horizontal beam pattern optimization process.

A major advantage of the embodiments is the fact that existing codebooks 130, pilot signal and feedback mechanisms for the horizontal dimension may be reused. E.g., for LTE / LTE-A, cell-specific reference symbols are used in conjunction with PMI (precoding matrix indicator) and CQI (channel quality indicator) feedback. This standardized information may be extended according to the embodiments by signaling information which characterizes modifications to the existing codebook entries according to the embodiments.

Per se, according to a further embodiment, vertical beamforming of common pilots (i.e., pilot signals) and transmission to new users/receivers 210 may be done with a default downtilt: This means that each per-antenna cell-specific reference symbol, e.g. representing a whole vertical column of antenna elements 110_1_1, .., 110_1_4 (Fig. 3), is already beamformed with a predetermined default downtilt.

Generally, three-dimensional (3-D) beamforming (also referred to as "beamsteering") can be done as follows:

$$w_i = \exp(-jk(y_i \sin\varphi \sin\Theta + z_i \cos\Theta))$$, wherein $w_i$ represents a weight factor for antenna element i at position ($y_i$, $z_i$) and elevation $\Theta$ and azimuth $\varphi$. According to another embodiment, the antenna system 110 (Fig. 3) may only be steered, i.e. controlled, on a per-column-basis in a default elevation direction $\Theta$, which can be done by providing weighting factors of the form:

$$w_i = \exp(-jk(z_i \cos\Theta)).$$

According to another embodiment, a default downtilt, which is associated with a default vertical beam pattern, may be used when initially transmitting data to a receiver for the first time, i.e. when the receiver 220 joins a radio cell provided by said transmitter 100. The default downtilt may e.g. be chosen with the same value as an optimized static downtilt for classical 2-D beamforming systems. While each column of an existing beamforming matrix can be weighted based on the weighting factors $W_i$ as defined above, relative weights between the columns of said matrix can be identical to the 2-D solutions, i.e. existing codebook entries, provided by the existing PMI-based feedback reporting. Thereby, the horizontal beamforming process is not influenced by the vertical beamforming extension according to the embodiments.

A further preferred embodiment is explained below. When there is data transmission from the transmitter 100 to a receiver 210, usually dedicated pilots (i.e., dedicated pilot signals, which can also be called user specific reference symbols, training symbols with user-specific antenna weights, ...) can be used for demodulation purposes. In LTE / LTE-A, there are dedicated pilots (from release 9 on, there are more than one set of dedicated pilots, which are orthogonal). In LTE-A there are so-called demodulation reference symbols which offer orthogonal pilot sequences for at least 4 spatial streams. They are inserted into the physical resource blocks (PRB) dedicated to the respective user and are precoded/beamformed, so that the overall precoded/beamformed transmission of one stream can be seen from receiver perspective as a transmission from a single virtual antenna.

With K many available orthogonal sets of dedicated reference symbols, if now N spatial streams are used by a certain receiver 210, there are K-N many spatial streams or sequences which are unused. According to a preferred embodiment, at least a part of the K-N many "remaining sequences", i.e. the presently unused spatial streams, may be employed for precoding/beamforming with alternative downtilts. For example, up to K-N many presently unused spatial streams may be used by the transmitter 100 to transmit different pilot signals PS1, PS2 with different downtilts (attained by providing modified beamforming matrices) to the receiver 210, particularly for testing whether these different downtilts lead to better SINR values.

According to an embodiment, if a default downtilt (e.g., as provided by an existing codebook entry) is at $\Theta d = 102°$ and a receiver 210 is served with one spatial stream with this downtilt by the transmitter 100, a first pilot sequence PS1 is precoded with Θd=102° (in conjunction with the azimuthal weights from the existing 2-D codebook based on PMI-feedback). In addition to that, a second pilot sequence PS2 is transmitted with another downtilt of Θd=99° (so uptilted by 3°), and a third pilot sequence is transmitted with Θd=105° (so downtilted by 3°) .

According to a further embodiment, in case of dual stream transmission, wherein a receiver 210 is simultaneously supplied with two spatial streams by the transmitter 100: 1st / 2nd stream and sequence are transmitted with Θd=102° (together with the two azimuthal PMI-based weight vectors). A 3rd / 4th sequence, which may comprise pilot signals, are now transmitted with downtilts of Θd=99° / 105°, i.e. alternative downtilts with respect to the first and second spatial streams. Since the third and fourth spatial streams are only required for "test purposes", i.e. the determination of an optimized downtilt, and no user data has to be transmitted via the third and fourth spatial streams, just a first azimuthal PMI-based weight vector may be employed for the transmission via the third and fourth spatial streams.

As already mentioned above, according to a further embodiment, the transmit power of the additional sequences may be lowered in order to keep as low impact as possible on a channel estimation quality of an actual data transmission e.g. employing a first pilot sequence PS1 which is transmitted using an existing codebook entry. The transmit power of the additional sequences may either be lowered by a default value (also known at the receiver 210) or it could be an adaptive choice by the transmitter 100 which has to be indicated by forward signalling, i.e. in the downlink direction. This lowered transmit power value has to be taken into account at the receiver 210 for SINR estimation.

According to a further embodiment, e.g. in (the unlikely) case the data transmission requires all K many available spatial streams, alternative downtilt sequences may be transmitted in a consecutive time slot / subframe with less than K used spatial streams.

According to a further embodiment, the provisioning and transmission of pilot signals PS2 with different, alternative downtilts preferably has to follow a set of (configurable) rules known at both ends 100, 210 of the link. Changes of the configuration could be indicated by higher layer signalling.

Example for such rules could be: If i many sequences (i.e., spatial streams) are used and there are at least 2 remaining sequences, then sequence i+1 is assigned a certain incremental uptilt (increment of the tilt angle (also:"downtilt angle") by a predetermined angle offset), while sequence i+2 is a certain incremental downtilt. If there is only one remaining sequence, then this sequence is an incremental uptilt in evenly numbered time-slots and an incremental downtilt in odd ones, i.e. positive and negative alterations of an currently used or standard downtilt are provided alternately.

According to an embodiment, having received the above mentioned sequences or pilot signals, the receiver 210 can compute respective resulting signal-to-interference-ratios (SINRs), e.g. at a decoder input (after receive combining). The receiver 210 may then compare the SINR of the downtilt used for transmission and the receive SINRs of all other alternative downtilts and find the best solution. This solution is now indicated via uplink feedback signalling FB1, FB2 (Fig. 8). A particularly simple indicator could be ternary: "-1": uptilt (=increase of tilt angle) is better; "0": keep tilt used for transmission; "1": downtilt (=decrease of tilt angle) is better.

According to a further embodiment, the feedback FB1, FB2 also includes information on an improvement in SINR between a reference tilt (or default tilt) and the best alternative as determined by the receiver 210. This allows taking into account SINR gains at the link adaptation. E.g., it might be necessary to correct reported CQI values, which are based on cell-specific reference symbols, using the default tilt.

According to a further embodiment, the transmitter 100 uses the knowledge obtained from the feedback FB1, FB2 of the receiver 210: If there is a better alternative downtilt, the transmitter 100 makes use of it for the next transmission, in case it is considered advantageous for the overall system. E.g., the transmitter keeps the modified beamforming matrix W'_i+1 (Fig. 7) for the future transmissions.

However, since increasing a tilt angle, i.e. rising the elevation of a main lobe of an antenna beam pattern, usually leads to higher interference caused to neighbour cells in the case of cellular radio networks, the transmitter 100 may decide whether it will use a new, increased tilt angle or not. Possibly, the transmitter 100 may coordinate its operation with transmitters of neighboring base stations, e.g. via backhaul, to make such decision.

The embodiments advantageously enable 3-D beamforming by providing a simple and yet efficient feedback extension which does not require changes to existing and/or standardized codebooks 130 and reference symbols. Rather, the basic mechanisms of established systems like LTE / LTE-A may be relied upon and extended as explained above.

Simulations have shown, that a user-specific downtilt in conjunction with coordinated interference avoidance in a beneficial scenario, can achieve a 10dB gain in the cumulative distribution function (CDF) of per-user-SINR and thus a much higher system performance. In order to obtain such gains, the optimal user-specific downtilts have to be known at the transmitter side, which may be achieved by employing the method according to the embodiments.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1.  Method of operating a transmitter (100) of a radio communications system, wherein a process of horizontal beam forming of an antenna characteristic of an antenna system (110) of the transmitter (100) is performed by applying (300) predetermined sets of weight factors (w_1_1, .., w_8_4) to signals associated with different antenna elements (110_1_1, ... 110_8_4) of said antenna system (110) for controlling the antenna characteristic in a horizontal direction, wherein at least one of said weight factors (w_1_1, .., w_8_4) is modified (310) so as to control said antenna characteristic in a vertical direction.

2.  Method according to claim 1, wherein a plurality of predetermined sets of weight factors (w_1_1, .., w_8_4) is provided at the transmitter (100) and, preferably, also at at least one receiver (210) that is configured to receive signals from said transmitter (100).

3.  Method according to claim 2, wherein said plurality of predetermined sets of weight factors (w_1_1, .., w_8_4) is

    a) a codebook (130) as defined by

    a1) the long term evolution, LTE, and/or
    a2) LTE-Advanced, LTE-A, standard, and/or
    a3) another standard

    common to the transmitter (100) and said at least one receiver (210), or
    b) a modified codebook which has been derived from said codebook (130).

4.  Method according to one of the preceding claims, wherein said step of modifying (310) comprises multiplying one or more of said weight factors (w_1_1, .., w_8_4) with a factor depending on a desired tilt angle corresponding with said vertical direction.

5.  Method according to one of the preceding claims, wherein said transmitter (100) transmits at least two pilot signals (PS1, PS2), which are known at the transmitter (100) and at least one receiver (210) that is configured to receive signals from said transmitter (100), wherein each of said pilot signals (PS1, PS2) is associated with a different tilt angle.

6.  Method according to claim 5, wherein said pilot signals (PS1, PS2) are transmitted a) simultaneously within a1) different spatial streams and/or a2) different spreading codes and/or a3) different frequency sub-channels, and/or b) consecutively.

7.  Method according to one of the claims 5 to 6, wherein different pilot signals (PS1, PS2), which are associated with different tilt angles, are transmitted with different transmit power levels.

8.  Method according to one of the preceding claims, wherein said transmitter (100) is configured to receive (520) feedback information (FB1, FB2) comprising information on a quality measure associated with at least one transmission of said transmitter (100) at a specific tilt angle.

9.  Transmitter (100) of a radio communications system, wherein said transmitter (100) is configured to perform a process of horizontal beam forming of an antenna characteristic of an antenna system (110) of the transmitter (100) by applying (300) predetermined sets of weight factors (w_1_1, .., w_8_4) to signals associated with different antenna elements (110_1_1, ... 110_8_4) of said antenna system (110) for controlling the antenna characteristic in a horizontal direction, wherein said transmitter (100) is configured to modify (310) at least one of said weight factors (w_1_1, .., w_8_4) so as to control said antenna characteristic in a vertical direction.

10. Transmitter (100) according to claim 9, wherein said transmitter (100) is configured to perform the method according to one of the claims 2 to 8.

11. Method of operating a receiver (210) of a radio communications system, wherein said receiver (210) receives (510) at least two pilot signals (PS1, PS2) from a transmitter (100), which are known at the transmitter (100) and at the receiver (210), wherein each of said pilot signals (PS1, PS2) is associated with a different tilt angle corresponding with a vertical direction of an antenna characteristic of an antenna system (110) of the transmitter (100).

12. Method according to claim 11, wherein said pilot signals (PS1, PS2) are received a) simultaneously within a1) different spatial streams and/or a2) different spreading codes and/or a3) different frequency sub-channels, and/or b) consecutively.

13. Method according to one of the claims 11 to 12, wherein said receiver (210) evaluates said pilot signals (PS1, PS2) to determine a quality measure associated with said pilot signals (PS1, PS2), and returns feedback information (FB1, FB2) comprising information on said quality measure to the transmitter (100).

14. Receiver (210) of a radio communications system, wherein said receiver (210) is configured to receive (510) at least two pilot signals (PS1, PS2) from a transmitter (100), which are known at the transmitter (100) and at the receiver (210), wherein each of said pilot signals (PS1, PS2) is associated with a different tilt angle.

15. Receiver (210) according to claim 14, wherein said receiver is configured to perform the method according to one of the claims 12 to 13.

Fig. 1

Fig. 2

## Fig. 3

## Fig. 4

$$W = \begin{pmatrix} w\_1\_1 & w\_2\_1 & w\_3\_1 & w\_4\_1 & w\_5\_1 & w\_6\_1 & w\_7\_1 & w\_8\_1 \\ w\_1\_2 & w\_2\_2 & w\_3\_2 & w\_4\_2 & w\_5\_2 & w\_6\_2 & w\_7\_2 & w\_8\_2 \\ w\_1\_3 & w\_2\_3 & w\_3\_3 & w\_4\_3 & w\_5\_3 & w\_6\_3 & w\_7\_3 & w\_8\_3 \\ w\_1\_4 & w\_2\_4 & w\_3\_4 & w\_4\_4 & w\_5\_4 & w\_6\_4 & w\_7\_4 & w\_8\_4 \end{pmatrix}$$

## Fig. 5

Fig. 6

Fig. 7

$$W\_i+1 \rightarrow [400] \xrightarrow{W'\_i+1} [410] \rightarrow SINR$$

Fig. 8

Europäisches
Patentamt

European
Patent Office

Office européen
des brevets

# EUROPEAN SEARCH REPORT

Application Number

EP 11 29 0358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 204 163 A2 (KMW INC [KR]) 8 May 2002 (2002-05-08) * paragraphs [0020], [0025] - [0027], [0032] - paragraphs [0037], [0044]; figures 3,8 * | 1,2,4,9, 10 | INV. H04B7/06 |
| X | US 6 188 373 B1 (MARTEK GARY ALLEN [US]) 13 February 2001 (2001-02-13) * column 13, line 31 - column 14, line 62; figures 4,7 * | 1,2,4,9, 10 | |
| A | US 2011/103504 A1 (MA ZHENGXIANG [US]) 5 May 2011 (2011-05-05) * paragraphs [0056], [0067] - paragraph [0070]; figures 7,11,12 * | 3 | |
| A | WO 02/15432 A1 (FUJITSU LTD [JP]; GUO YINGJIE JAY [GB]) 21 February 2002 (2002-02-21) * page 22, line 25 - page 23, line 19; claims 1-5 * | 8 | |
| | -/-- | | TECHNICAL FIELDS SEARCHED (IPC) H04B H01Q H04L H04W |

The present search report has been drawn up for all claims

| Place of search | Date of completion of the search | Examiner |
|---|---|---|
| Munich | 3 May 2012 | Franz, Volker |

EPO FORM 1503 03.82 (P04C01)

## EUROPEAN SEARCH REPORT

Application Number

EP 11 29 0358

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Draft Amendment to IEEE Standard for Information technology Telecommunications and information exchange between systems Local and metropolitan area networks Specific requirements Specific requirementsâ Part 15.3: Wireless M edium Access C ontrol (M AC ) and Physical Layer (PH Y) Specifications for H", IEEE DRAFT; P802-15-3C-D02_DRAFT_AMENDMENTCMP, IEEE-SA, PISCATAWAY, NJ USA, vol. 802.15.3c, 24 October 2008 (2008-10-24), pages 1-264, XP017634235, [retrieved on 2008-10-24] | 1-3,5,6, 8-15 | |
| Y | * Chapter 13 Beam forming; | 7 | |
| A | page 153 - page 187 * | 4 | |
| Y | EP 0 531 090 A2 (NIPPON TELEGRAPH & TELEPHONE [JP]) 10 March 1993 (1993-03-10) * column 8, line 8 - column 8, line 15 * | 7 | TECHNICAL FIELDS SEARCHED (IPC) |

The present search report has been drawn up for all claims

| Place of search | Date of completion of the search | Examiner |
|---|---|---|
| Munich | 3 May 2012 | Franz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 11 29 0358

The Search Division considers that the present European patent application does not comply with the
requirements of unity of invention and relates to several inventions or groups of inventions, namely:

```
1. claims: 1-4, 8-10

        Transmitter performing horizontal and vertical beamforming
        using codebooks.
                            ---

2. claims: 5-7, 11-15

        Transmitting and receiving at least two pilot signals being
        associated with a different tilt angle.
                            ---
```

## ANNEX TO THE EUROPEAN SEARCH REPORT
## ON EUROPEAN PATENT APPLICATION NO.                    EP 11 29 0358

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2012

| Patent document cited in search report | | Publication date | Patent family member(s) | | | Publication date |
|---|---|---|---|---|---|---|
| EP 1204163 | A2 | 08-05-2002 | AU | 9607701 | A | 15-05-2002 |
| | | | BR | 0102610 | A | 02-07-2002 |
| | | | CN | 1353508 | A | 12-06-2002 |
| | | | EP | 1204163 | A2 | 08-05-2002 |
| | | | JP | 4462524 | B2 | 12-05-2010 |
| | | | JP | 2002171116 | A | 14-06-2002 |
| | | | KR | 20020034724 | A | 09-05-2002 |
| | | | TW | 554570 | B | 21-09-2003 |
| | | | US | 2002053995 | A1 | 09-05-2002 |
| | | | WO | 0237605 | A1 | 10-05-2002 |
| US 6188373 | B1 | 13-02-2001 | NONE | | | |
| US 2011103504 | A1 | 05-05-2011 | NONE | | | |
| WO 0215432 | A1 | 21-02-2002 | EP | 1310051 | A1 | 14-05-2003 |
| | | | JP | 4344133 | B2 | 14-10-2009 |
| | | | JP | 2004507151 | A | 04-03-2004 |
| | | | US | 2004014429 | A1 | 22-01-2004 |
| | | | WO | 0215432 | A1 | 21-02-2002 |
| EP 0531090 | A2 | 10-03-1993 | DE | 69230847 | D1 | 04-05-2000 |
| | | | DE | 69230847 | T2 | 27-07-2000 |
| | | | EP | 0531090 | A2 | 10-03-1993 |
| | | | JP | 2949533 | B2 | 13-09-1999 |
| | | | JP | 5063634 | A | 12-03-1993 |
| | | | US | 5551060 | A | 27-08-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   EP 2161783 A1

**Non-patent literature cited in the description**

•   **R.J. MAILLOUX.** Phased Array Antenna Handbook. Artech House, 1993